# FASCICULE DE BREVET EUROPEEN

(11) **EP 3 638 484 B1**
(45) Date de publication et mention de la délivrance du brevet: **13.11.2024**
(21) Numéro de dépôt: 18729157.0
(22) Date de dépôt: 12.06.2018
(51) Int. Cl.: B29C 57/10

(54) **CONDUIT POUR RÉSERVOIR À CARBURANT DE VÉHICULE CONVENANT POUR LA SOUDURE ET PROCÉDÉ**
ZUM SCHWEISSEN GEEIGNETES ROHR FÜR EINEN FAHRZEUGKRAFTSTOFFBEHÄLTER UND VERFAHREN
PIPE FOR A VEHICLE FUEL TANK SUITABLE FOR WELDING AND METHOD

(30) Priorité: 16.06.2017 FR 1755494
(43) Date de publication de la demande: 22.04.2020
(73) Titulaire: Plastic Omnium Advanced Innovation and Research, 1130 Bruxelles (BE)
(72) Inventeur: GATET, Aur lien, 60270 Gouvieux (FR); DEVILLERS, Camille, 60157 Elincourt Saint Marguerite (FR)
(74) Mandataire: LLR
(86) Numéro de dépôt international: PCT/EP2018/065500
(87) Numéro de publication internationale: WO 2018/229049

(56) Documents cités:
- WO-A1-00/29773
- WO-A1-97/24219
- DE-A1- 10 214 900
- US-A- 5 069 856
- US-A1- 2013 221 001

## Description

L'invention concerne les réservoirs à carburant de véhicule. Plus particulièrement, l'invention concerne un conduit pour réservoir à carburant de véhicule convenant pour la soudure.

Un système de stockage de carburant de véhicule comprend généralement un réservoir dans lequel le carburant est stocké. Plusieurs accessoires ou éléments, qui remplissent différentes fonctions, sont fixés à ce réservoir. La soudure constitue un procédé de fixation qui est souvent choisi à cet effet. Un des éléments qui est fixé par soudure est notamment le conduit d'alimentation du réservoir en carburant.

Il est connu de doter une paroi du conduit d'une couche barrière, du côté interne du conduit, dont la fonction est d'augmenter l'imperméabilité du conduit. Cela permet de réduire les risques de fuite du carburant ou de gaz s'écoulant dans le conduit. Un matériau généralement choisi pour cette couche barrière est l'éthylène alcool vinylique (EVOH). Toutefois, les propriétés de ce polymère sont incompatibles pour une soudure au réservoir. C'est pour cela que la paroi du conduit est généralement multicouche et comprend une couche barrière et une couche de polymère convenant pour la soudure. Le document US 5 069 856 A divulgue un procédé de fabrication d'un conduit selon le préambule de la revendication 1. Les documents WO 00/29773 A1, US 2013/221001 A1, WO 97/24219 A1 et DE 102 14 900 A1 divulguent d'autres conduits et procédés de fabrication de conduit.

Afin de créer une interface d'aire suffisante pour la soudure et d'avoir une épaisseur suffisante de polymère convenant pour la soudure du côté du conduit, plusieurs solutions existent.

Une première solution est de rapporter une pièce telle qu'une ailette à la portion d'extrémité du conduit destinée à être soudée au réservoir. L'ailette apporte un supplément d'aire à l'interface conduit/réservoir, et on peut réaliser l'ailette dans un polymère convenant pour la soudure. Toutefois, l'installation de cette ailette engendre un surcoût et une étape supplémentaire dans le procédé de fixation, si bien qu'il est préférable de ne pas recourir à cette solution.

Une deuxième solution est de comprimer axialement une partie du conduit lors de son moulage. De la sorte, on crée un bourrelet localisé sur une partie du conduit. Si celui-ci est situé à l'extrémité du conduit, l'agencement des couches de la paroi du conduit permet la formation d'une épaisseur de polymère convenant pour la soudure dans la direction principale du conduit. En d'autres termes, on éloigne l'EVOH de l'extrémité axiale du conduit. Il est ainsi possible de souder l'extrémité du conduit au réservoir. Cependant, la génération du bourrelet nécessite d'opérer un mouvement du conduit pendant son moulage. Cette opération peut s'avérer critique et n'est pas nécessairement maîtrisée, ce qui nuit à la reproductibilité de la fabrication du conduit. De plus, ce mouvement constitue une opération supplémentaire dans le procédé de fixation, ce qui contribue à le complexifier.

Par ailleurs, ces deux solutions présentent un inconvénient supplémentaire commun en ce qu'on augmente localement le diamètre du conduit. Selon la forme et les dimensions du réservoir à carburant, cela peut constituer une contrainte. Il peut donc être préférable d'éviter d'augmenter l'encombrement du conduit.

Un but de l'invention est de remédier aux inconvénients présentés ci-dessus et de proposer un conduit compact, adapté pour une soudure et simple à réaliser.

A cet effet, on prévoit selon l'invention un procédé de fabrication d'un conduit de réservoir à carburant de véhicule selon la revendication 1.

L'étape de découpe de la portion d'extrémité permet de ne pas modifier la forme générale du conduit tout en gardant l'aptitude à la soudure conférée par la forme donnée au conduit dans le moule. De plus, la formation de l'épaulement mâle de la paroi du conduit se fait de manière passive lors du moulage. On ne complexifie donc pas le procédé de fabrication du conduit.

Par ailleurs, on s'affranchit de l'étape de mouvement de la paroi dans le moule (pour générer le bourrelet dans l'art antérieur) qui est source de perte de reproductibilité de la fabrication du conduit.

Enfin, la forme de l'épaulement femelle et l'étape de découpe font qu'on n'augmente pas localement le diamètre externe du conduit, contrairement aux deux solutions de l'art antérieur présentées dans ce qui précède. On s'affranchit donc aussi de cet inconvénient.

Selon un premier mode de réalisation de l'invention, l'étape de découpe a lieu parallèlement à un axe principal du conduit.

Selon un deuxième mode de réalisation de l'invention, l'étape de découpe a lieu selon un angle non nul par rapport à un axe principal du conduit.

De préférence, l'étape de découpe a lieu selon un angle inférieur à 60° par rapport à l'axe principal, préférentiellement inférieur à 30°.

Ainsi, plusieurs modes de découpe sont envisageables. Cela contribue à rendre le procédé de fabrication du conduit souple et adaptable aux installations de fabrication à disposition. Si l'étape de découpe a lieu selon un angle non nul par rapport à un axe principal du conduit, il est préférable de le choisir aussi petit que possible afin de limiter la réduction du diamètre intérieur du conduit, qui pourrait impacter négativement la performance en remplissage du conduit.

Avantageusement, l'épaulement femelle du moule est formé par un insert, optionnellement amovible.

Un moule classique peut ainsi être aisément amélioré pour permettre la formation de l'épaulement mâle de la paroi du conduit. En rendant l'insert amovible, on peut facilement modifier la forme de l'épaulement femelle et ainsi facilement modifier la forme et les dimensions de l'épaulement mâle du conduit.

Avantageusement, on réalise l'étape de moulage par soufflage de la paroi dans le moule.

Le moulage par soufflage est une opération maîtrisée et qui convient à l'invention.

On prévoit également selon l'invention un procédé de fabrication d'un système de stockage de carburant de véhicule, dans lequel :
- on fabrique un conduit selon un procédé tel qu'énoncé dans ce qui précède, et
- on soude l'extrémité du conduit à un réservoir à carburant.

On prévoit aussi selon l'invention un conduit pour réservoir à carburant selon la revendication 8.

Avantageusement, la portion d'extrémité présente un diamètre externe inférieur ou égal à un diamètre externe d'une portion du conduit contigüe à la portion d'extrémité.

On s'assure ainsi qu'on n'augmente pas localement le diamètre externe du conduit sur le lieu du soudage, ce qui permet d'éviter un encombrement inutile.

On prévoit de plus un moule de fabrication d'un conduit de réservoir de carburant de véhicule, qui comprend au moins un épaulement femelle agencé pour créer au moins un épaulement mâle sur une surface externe d'une portion d'extrémité d'une paroi lors du moulage de celle-ci.

Avantageusement, l'épaulement femelle est formé par un insert, optionnellement amovible.

On va maintenant décrire un mode de réalisation de l'invention à l'appui des dessins annexés sur lesquels :
- la figure 1 est une vue en section longitudinale d'un conduit de réservoir à carburant de véhicule selon un premier mode de réalisation de l'invention,
- la figure 2 illustre une étape de découpe d'un procédé de fabrication du conduit de la figure 1,
- la figure 3 illustre une portion d'extrémité du conduit de la figure 1 après une étape de découpe,
- la figure 4 illustre une portion d'extrémité d'un conduit pour réservoir à carburant de véhicule selon un second mode de réalisation de l'invention,
- la figure 5 est une vue schématique illustrant un moule comprenant un épaulement femelle convenant pour la mise en oeuvre d'un procédé de fabrication selon l'invention,
- la figure 6 est une vue schématique illustrant la soudure du conduit de la figure 1 à un réservoir à carburant, et
- la figure 7 est une vue en coupe de la soudure du conduit au réservoir telle qu'illustrée en figure 6.

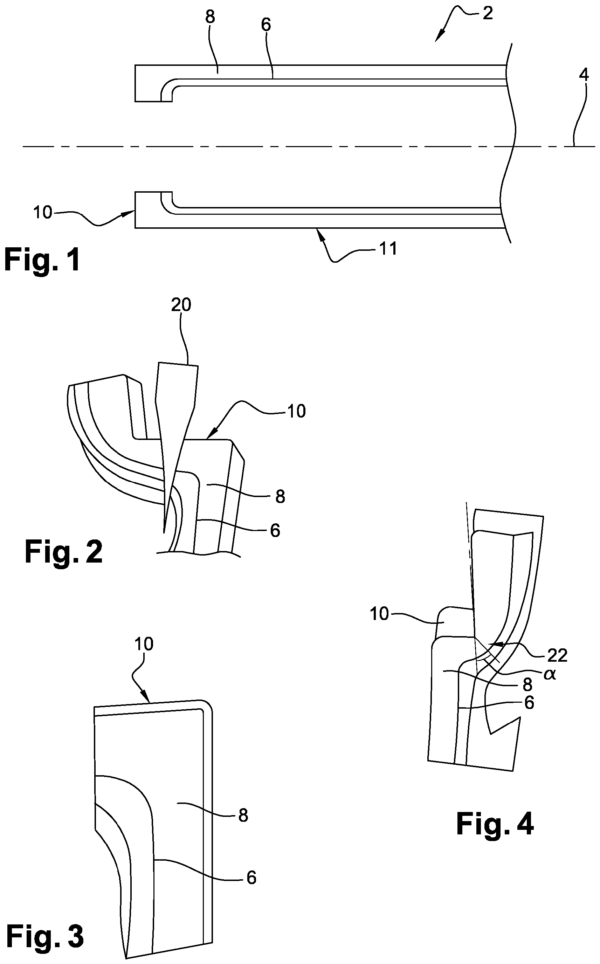

On a représenté en figure 1 un conduit 2 selon un premier mode de réalisation de l'invention. Le conduit 2 présente un axe principal 4. Dans le cas présent, le conduit 2 a au moins localement une forme cylindrique, mais on pourrait prévoir que le conduit ait une toute autre forme.

Le conduit 2 comprend une paroi elle-même comportant plusieurs couches. Dans le cas présent, elle comprend une couche interne 6 et une couche externe 8 qui se superposent radialement sur une grande partie du conduit 2.

La couche interne 6 est réalisée dans un matériau dit barrière qui permet de diminuer la perméabilité du conduit 2. Elle est ici réalisée en éthylène alcool vinylique (EVOH). On pourrait toutefois choisir un tout autre matériau barrière présentant des propriétés similaires à l'EVOH.

La couche externe 8 est réalisée dans un polymère convenant pour la soudure ultérieure du conduit 2 à un réservoir à carburant. De tels polymères sont bien connus de l'homme du métier. Il peut s'agir par exemple de polyéthylène haute densité (PEHD).

On entend par couche interne 6 la couche se situant radialement sous la couche externe 8. En d'autres termes, la couche interne 6 n'est pas exposée sur une surface radiale externe du conduit 2. La couche interne 6 peut être constituée d'une pluralité de couches comprenant des matériaux différents. Par exemple on peut prévoir une structure de paroi à six ou sept couches comprenant, de l'intérieur vers l'extérieur du conduit, une couche conductrice de PEHD conducteur, optionnellement une couche intermédiaire en PEHD, une couche d'adhésif, une couche barrière en EVOH, une couche d'adhésif, une couche intermédiaire et enfin une couche décorative de PEHD noir. Dans ce cas, la couche décorative de PEHD noir constitue la couche externe et l'ensemble des cinq ou six autres couches constituent la couche interne au sens de l'invention. La couche interne est alors réalisée partiellement en EVOH.

Dans ce qui suit, on va considérer que la paroi comprend uniquement deux couches, à savoir les couches interne 6, intégralement en EVOH, et externe 8, afin de faciliter la présentation de l'invention.

Le conduit 2 présente une extrémité axiale 10 convenant pour le soudage du conduit 2. L'autre extrémité du conduit 2 n'a pas été représentée et ne sera pas décrite car sa description n'est pas nécessaire à la compréhension de l'invention. Comme cela est visible sur la figure 1, la portion d'extrémité 10 du conduit est constituée du polymère convenant pour la soudure. Le conduit 2 peut ainsi être aisément soudé au niveau de cette extrémité 10 car l'EVOH, matériau incompatible avec la soudure, n'est pas présente dans la portion d'extrémité 10.

Toujours visible sur la figure 1, un diamètre externe du conduit 2 au niveau de la portion d'extrémité 10 est inférieur ou égal à un diamètre externe d'une partie médiane 11 du conduit 2. Ici, la portion d'extrémité 10 présente un diamètre externe inférieur ou égal à un diamètre externe d'une portion du conduit contigüe à la portion d'extrémité 10. Dans l'intégralité de la partie médiane 11 du conduit 2, les couches interne 6 et externe 8 se superposent radialement. Ici, le diamètre externe du conduit 2 au niveau de la portion d'extrémité 10 est environ égal au diamètre de la partie médiane 11. La partie médiane 11 du conduit 2 est située en dehors de ses deux portions d'extrémités axiales.

Ces propriétés du conduit sont intéressantes pour des raisons qui seront décrites plus loin dans la demande.

On va maintenant décrire un procédé de fabrication du conduit selon un premier mode de réalisation.

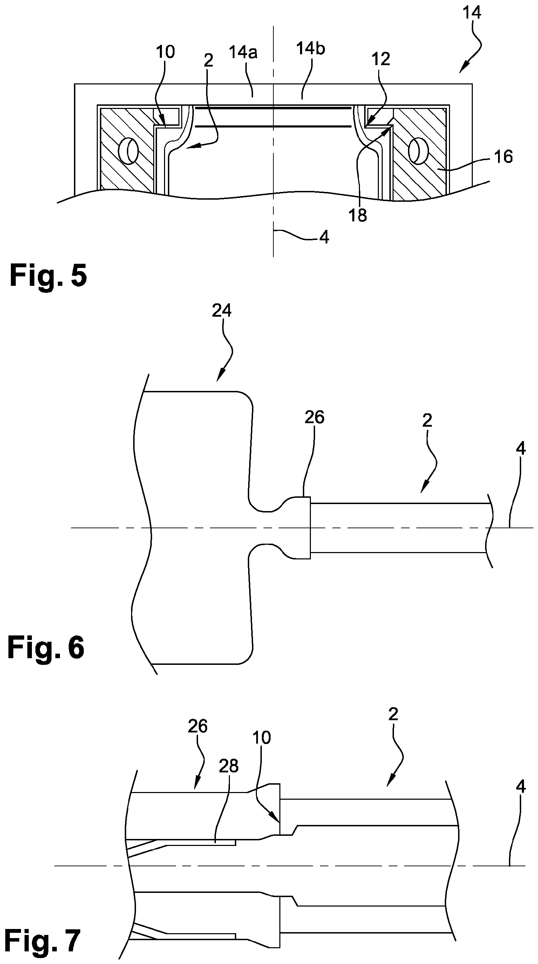

En référence à la figure 5, on moule dans un premier temps la paroi comprenant la couche en EVOH et la couche en polymère convenant pour la soudure dans un moule 14 permettant un moulage par soufflage.

Le moule 14 comprend deux parties de moule 14a et 14b portant chacun une partie d'un insert 16. Celui-ci forme dans le moule un épaulement femelle 18 agencé pour créer au moins un épaulement mâle 12 sur une surface externe de la portion d'extrémité de la paroi lors du moulage. Une fois le moulage terminé, la paroi prend la forme du conduit 2.

Après le moulage, on découpe la portion d'extrémité 10 du conduit 2. Comme cela est visible sur la figure 2, on effectue cette découpe parallèlement à l'axe 4, selon la flèche 20. De la sorte, on retire du conduit 2 la partie de la portion d'extrémité 10 présentant l'épaulement mâle 12. C'est grâce à cette découpe que la partie de la portion d'extrémité 10 du conduit 2 restante est constituée, intégralement, du polymère convenant pour la soudure. Ceci est visible à grande échelle sur la figure 3.

Selon un deuxième mode de réalisation de l'invention illustré en figure 4, on n'effectue pas la découpe de la portion d'extrémité 10 parallèlement à l'axe 4, mais selon un angle α non nul par rapport à l'axe 4, selon la ligne de découpe 22. Cet angle α est inférieur à 60°, il est environ égal à 45° sur la figure 4. Il est toutefois préférable que cet angle α soit inférieur à 30°. De manière identique au premier mode de réalisation, la partie de la portion d'extrémité 10 du conduit 2 restante est constituée du polymère convenant pour la soudure.

On a représenté en figure 6 un réservoir à carburant 24 appartenant à un système de stockage de carburant de véhicule selon l'invention. Ce système de stockage est fabriqué selon le procédé suivant :
- on fabrique le conduit 2 selon un procédé conforme à ce qui précède, selon l'un quelconque des deux modes de réalisation présentés, puis
- on soude la portion d'extrémité 10 du conduit 2 au réservoir 24.

Grâce au fait que la portion d'extrémité 10 du conduit 2 est constituée du polymère convenant pour la soudure, il est possible de procéder directement à la soudure sans qu'il ne soit nécessaire de préparer à cette fin le conduit 2 ou le réservoir 24.

De plus, cela permet à la portion d'extrémité 10 du conduit 2 de garder une forme similaire à un conduit de remplissage identique ne comprenant pas de couche d'EVOH, pour lequel la portion d'extrémité ne nécessite pas d'adaptation particulière et présente un diamètre externe constant.

De plus, le fait que le diamètre de la paroi du conduit 2 au niveau de la portion d'extrémité 10 soit inférieur ou égal au diamètre externe de la partie médiane 11 de la paroi rend possible la soudure du conduit 2 dans une embouchure ou goulotte 26 prévue sur une paroi du réservoir 24. Comme cela est visible sur la figure 7, le diamètre externe constant, ou décroissant vers l'extrémité 10, du conduit 2 lui permet d'épouser la forme de la goulotte 26. Cela permet également de ne pas entraver le fonctionnement d'une valve d'admission 28 située dans la goulotte 26. Cette valve 28 est communément désignée par les termes anglo-saxons « inlet check valve » (ICV).

Bien entendu, on pourra apporter à l'invention de nombreuses modifications sans sortir du cadre de celle-ci.

L'invention est également applicable à la soudure du conduit à une tête de tubulure. En pratique, la seconde extrémité du conduit peut être soudée à une telle tête de tubulure. Les modes de réalisation de l'invention présentés dans ce qui précède restent applicables si on remplace le réservoir 24 et sa goulotte 26 par une tête de tubulure.

## Revendications

1. Procédé de fabrication d'un conduit (2), dans lequel on moule une paroi, comprenant une couche interne (6) réalisée en éthylène alcool vinylique (EVOH) et une couche externe (8) réalisée dans un polymère convenant pour une soudure, dans un moule (14) comprenant au moins un épaulement femelle (18) qui crée au moins un épaulement mâle (12) sur une surface externe d'une portion d'extrémité de la paroi lors du moulage, **caractérisé en ce que** le conduit forme un conduit de réservoir à carburant, et après le moulage de la paroi, on découpe la portion d'extrémité de la paroi.

2. Procédé selon la revendication 1, dans lequel l'étape de découpe a lieu parallèlement à un axe principal (4) du conduit (2).

3. Procédé selon la revendication 1, dans lequel l'étape de découpe a lieu selon un angle non nul par rapport à un axe principal (4) du conduit.

4. Procédé selon la revendication 3, dans lequel l'étape de découpe a lieu selon un angle inférieur à 60° par rapport à l'axe principal (4), préférentiellement inférieur à 30°.

5. Procédé selon l'une quelconque des revendications précédentes, dans lequel l'épaulement femelle (18) du moule (14) est formé par un insert (16), optionnellement amovible.

6. Procédé selon l'une quelconque des revendications précédentes, dans lequel on réalise l'étape de moulage par soufflage de la paroi dans le moule (14).

7. Procédé de fabrication d'un système de stockage de carburant, **caractérisé en ce que** :
- on fabrique un conduit (2) selon un procédé conforme à l'une quelconque des revendications précédentes, et
- on soude l'extrémité (10) du conduit (2) à un réservoir à carburant (24).

8. Conduit (2) pour réservoir à carburant de véhicule, comprenant une paroi comportant une couche interne (6) réalisée en éthylène alcool vinylique (EVOH) et une couche externe (8) réalisée dans un polymère convenant pour la soudure, un diamètre externe du conduit (2) au niveau de la portion d'extrémité (10) étant inférieur ou égal à un diamètre externe d'une partie médiane (11) du conduit (2), **caractérisé en ce qu'**une portion d'extrémité axiale du conduit (2) est constituée du polymère convenant pour la soudure, la portion d'extrémité axiale du conduit (2) présentant une épaisseur convenant pour la soudure du conduit (2).

9. Conduit (2) selon la revendication précédente, dans lequel la portion d'extrémité (10) présente un diamètre externe inférieur ou égal à un diamètre externe d'une portion du conduit contigüe à la portion d'extrémité (10).

## Patentansprüche

1. Verfahren zur Herstellung einer Leitung (2), wobei eine Wand geformt wird, die eine innere Schicht (6), die aus Ethylenvinylalkohol (EVOH) hergestellt ist, und eine äußere Schicht (8), die aus einem zum Schweißen geeigneten Polymer hergestellt ist, aufweist, in einer Form (14) mit mindestens einer weiblichen Schulter (18), die beim Formen mindestens eine männliche Schulter (12) auf einer Außenfläche eines Endabschnitts der Wand erzeugt, **dadurch gekennzeichnet, dass** die Leitung eine Kraftstoffbehälterleitung bildet, und nach dem Formen der Wand der Endabschnitt der Wand abgeschnitten wird.

2. Verfahren nach Anspruch 1, wobei der Schritt des Schneidens parallel zu einer Hauptachse (4) der Leitung (2) erfolgt.

3. Verfahren nach Anspruch 1, wobei der Schritt des Schneidens in einem von Null verschiedenen Winkel zu einer Hauptachse (4) der Leitung erfolgt.

4. Verfahren nach Anspruch 3, wobei der Schritt des Schneidens in einem Winkel von weniger als 60° zur Hauptachse (4), vorzugsweise weniger als 30°, stattfindet.

5. Verfahren nach einem der vorhergehenden Ansprüche, wobei die weibliche Schulter (18) der Form (14) durch einen Einsatz (16) gebildet wird, der optional herausnehmbar ist.

6. Verfahren nach einem der vorhergehenden Ansprüche, wobei der Schritt des Formens durch Blasen der Wand in die Form (14) durchgeführt wird.

7. Verfahren zur Herstellung eines Kraftstoffspeichersystems, **dadurch gekennzeichnet, dass**:
- eine Leitung (2) nach einem Verfahren gemäß einem der vorhergehenden Ansprüche hergestellt wird, und
- das Ende (10) der Leitung (2) an einen Kraftstoffbehälter (24) geschweißt wird.

8. Leitung (2) für einen Fahrzeugkraftstoffbehälter, aufweisend eine Wand mit einer inneren Schicht (6), die aus Ethylenvinylalkohol (EVOH) hergestellt ist, und einer äußeren Schicht (8), die aus einem zum Schweißen geeigneten Polymer hergestellt ist, wobei ein Außendurchmesser der Leitung (2) an dem Endabschnitt (10) kleiner oder gleich einem Außendurchmesser eines Mittelabschnitts (11) der Leitung (2) ist, **dadurch gekennzeichnet, dass** ein axialer Endabschnitt der Leitung (2) aus dem zum Schweißen geeigneten Polymer besteht, wobei der axiale Endabschnitt der Leitung (2) eine Dicke aufweist, die zum Schweißen der Leitung (2) geeignet ist.

9. Leitung (2) nach dem vorhergehenden Anspruch, wobei der Endabschnitt (10) einen Außendurchmesser aufweist, der kleiner oder gleich einem Außendurchmesser eines Abschnitts der Leitung ist, der an den Endabschnitt (10) angrenzt.

## Claims

1. Method for manufacturing a pipe (2), comprising a step of molding a wall, comprising an inner layer (6) made of ethylene vinyl alcohol (EVOH) and an outer layer (8) made of a polymer suitable for welding, in a mold (14) comprising at least one female shoulder (18) that creates at least one male shoulder (12) on an outer surface of an end portion of the wall during molding, **characterized in that** the pipe forms a fuel tank pipe, and **in that** after the molding of the wall, the method comprises a step of cutting off the end portion of the wall.

2. Method according to claim 1, in which the cutting step takes place in parallel with a main axis (4) of the pipe (2).

3. Method according to claim 1, in which the cutting step takes place at a non-zero angle in relation to a main axis (4) of the pipe.

4. Method according to claim 3, in which the cutting step takes place at an angle of less than 60° in relation to the main axis (4), preferably less than 30°.

5. Method according to any of the preceding claims, in which the female shoulder (18) of the mold (14) is formed by an, optionally detachable, insert (16).

6. Method according to any of the preceding claims, in which the molding step is carried out by blow-molding the wall in the mold (14).

7. Method for manufacturing a fuel storage system, **characterized by**:
- manufacturing a pipe (2) according to a method corresponding to any of the preceding claims, and
- welding the end (10) of the pipe (2) to a fuel tank (24).

8. Pipe (2) for a vehicle fuel tank, comprising a wall having an inner layer (6) made of ethylene vinyl alcohol (EVOH) and an outer layer (8) made of a polymer suitable for welding, the outer diameter of the pipe (2) in the region of the end portion (10) being less than or equal to the outer diameter of a center part (11) of the pipe (2), **characterized in that** an axial end portion of the pipe (2) is consisting of the polymer suitable for welding, the axial end portion of the pipe (2) having a width suitable for the welding of the pipe (2).

9. Pipe (2) according to the preceding claim, wherein the outer diameter of the end portion (10) is less than or equal to the outer diameter of a portion of the pipe adjoining the end portion (10).
